# EUROPEAN PATENT SPECIFICATION

(11) **EP 1 596 264 B1**
(45) Date of publication and mention of the grant of the patent: **05.03.2008**
(21) Application number: 05252834.6
(22) Date of filing: 09.05.2005
(51) Int. Cl.: G05B 19/414, G05B 19/18

(54) **Numerical controller**
Numerische Steuerung
Unité de commande numérique

(30) Priority: 10.05.2004 JP 2004140342
(43) Date of publication of application: 16.11.2005
(73) Proprietor: Fanuc Ltd, Minamitsuru-gun, Yamanashi 401-0597 (JP)
(72) Inventor: Endou, Katuhiro, Fujiyoshida-shi Yamanashi 403-0016 (JP); Kobayashi, Masanori, Fanuc, Minamitsuru-gun Yamanashi 401-0511 (JP)
(74) Representative: Billington, Lawrence Emlyn

(56) References cited:
- EP-A- 0 851 328
- EP-A- 1 308 809
- WO-A-02/082192
- US-A1- 2002 003 416
- US-B1- 6 366 045

## Description

The present invention relates to a numerical controller having a plurality of control systems, and in particular to a numerical controller capable of synchronously controlling axes in the plurality of control systems even in a case where one axis and the other axis belong to different control systems.

There is known a numerical controller having a plurality of control systems to drivingly control axes in each control system. Further, a numerical controller capable of synchronously controlling axes in different control systems is known in the art. Generally in such synchronous control, a superposing control is performed in which a motion command for one axis (a master axis) is added to a motion command for the other axis (a slave axis) to be synchronized to obtain a final motion command for the other axis.

In the above conventional synchronous control, the slave axis is synchronized with the master axis in one-to-one relation. The slave axis is driven to move with the master axis by adding the motion command for the master axis to the motion command for the slave axis so that the slave axis moves relative to the master axis in synchronism therewith. In this arrangement, the other axis (slave axis) can not be controlled in synchronism at a predetermined ratio with the one axis (master axis).

In gear machining, the other axis for rotating a tool is driven with a predetermined ratio with respect to one axis for rotating a workpiece to be machined into a gear. In the conventional numerical controller, the other axis in different control systems can not be controlled to rotate in synchronism with the one axis at a predetermined ratio or the other axis can not be synchronously controlled to have predetermined relation in phase with the one axis.
Each of US 2002/003416 A1 and US-B1-6,366,045 discloses a numerical controller according to the precharacterising part of attached claim 1.

The present invention provides a numerical controller capable of performing synchronous control of axes in different control systems at desired ratios and also with desired phase relations.

A numerical controller of the present invention synchronously controls a master axis and at least one slave axis in a plurality of control systems. The numerical controller comprises: setting means for setting a synchronous ratio of the slave axis with respect to the master axis; synchronous motion amount producing means for producing a synchronous motion amount by multiplying a motion command for the master axis by the set synchronous ratio; and synchronous motion commanding means for determining a synchronous motion command for the slave axis by adding the synchronous motion amount to a motion command for the slave axis.

The numerical controller further comprises means for setting phase adjustment positions of the master axis and the slave axis, and compensation means for compensating the synchronous motion command for the slave axis such that phases of the master axis and the slave axis coincide with the set phase adjustment positions.

### BRIEF DESCRIPTION OF THE DRAWINGS

FIG. 1 is a block diagram of a numerical controller according to an embodiment of the present invention;
FIG. 2 is a diagram showing an example of gear machining controlled by the numerical controller;
FIG. 3 is a flowchart of processing for synchronous control; and
FIG. 4 is a continuation of the flowchart of FIG. 3.

### DETAILED DESCRIPTION

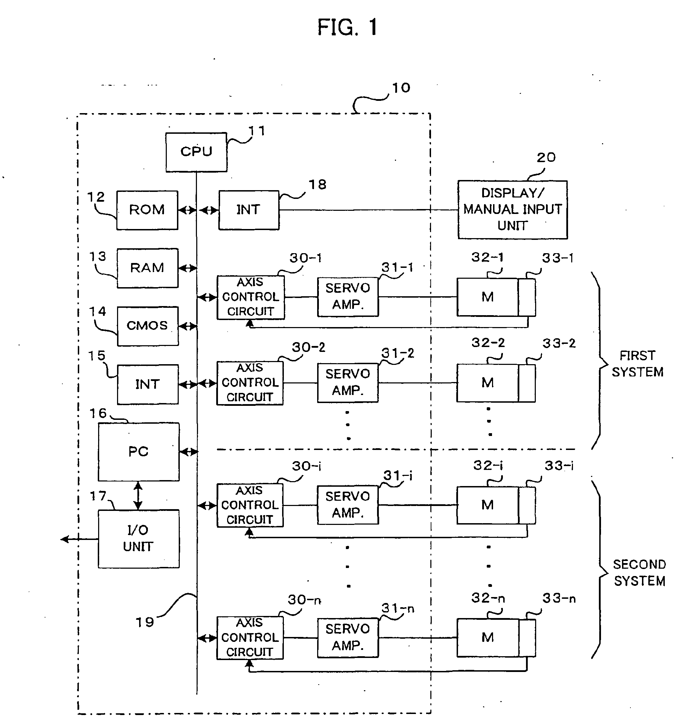

FIG. 1 shows a block diagram of a numerical controller 10 according to an embodiment of the present invention. A CPU 11 is a processor for generally controlling the numerical controller 10. A ROM 12, a RAM 13, a CMOS 14, interfaces 15, 18, a PC (programmable controller) 16, axes control circuits 30-1 to 30-n are connected to the CPU 11 through a bus 19. The CPU 11 reads a system program stored in the ROM 12 through the bus 19 and generally controls the numerical controller according to the system program. The RAM 13 stores temporary calculation data, display data and various data inputted by an operator through a display/manual input unit 20 connected to the bus 19 through the interface 18. The display/manual input unit 20 comprises a CRT or liquid crystal display and a manual data input device such as a keyboard.

The CMOS memory 14 is backed up by a battery to be a nonvolatile memory which retain a storage stage when a power to the numerical controller 10 is turned off. The CMOS memory 14 stores machining programs read through the interface 15 or inputted through the display/manual input device 20.

The interface 15 enables connection between the numerical controller 10 and external devices. The PC 16 controls auxiliary equipments of a machine tool as an object to be controlled by the numerical controller 10 by outputting signals through the I/O unit 17 to the auxiliary equipments in accordance with a sequence program prepared in the numerical controller 10. The PC 16 receives signals from various switches on an operation panel provided in the machine tool, and transfers the signals to the CPU 11 after performing necessary signal processing.

Servo amplifiers 31-1 to 31-n are connected to axis control circuits 30-1 to 30-n, respectively, which are connected to servomotors 32-1 to 32-n. Position/velocity detectors 33-1 to 33-n are provided at the respective servomotors 32-1 to 32-n, and output signals from the position/velocity detectors 33-1 to 33-n are fed back to the axis control circuits 30-1 to 30-n, respectively.

The axis control circuits 30-1 to 30-n perform position, velocity and further current feedback controls based on motion commands for respective axes and the feedback signals from the position/velocity detectors 33-1 to 33-n to control the servomotors 32-1 to 32-n.

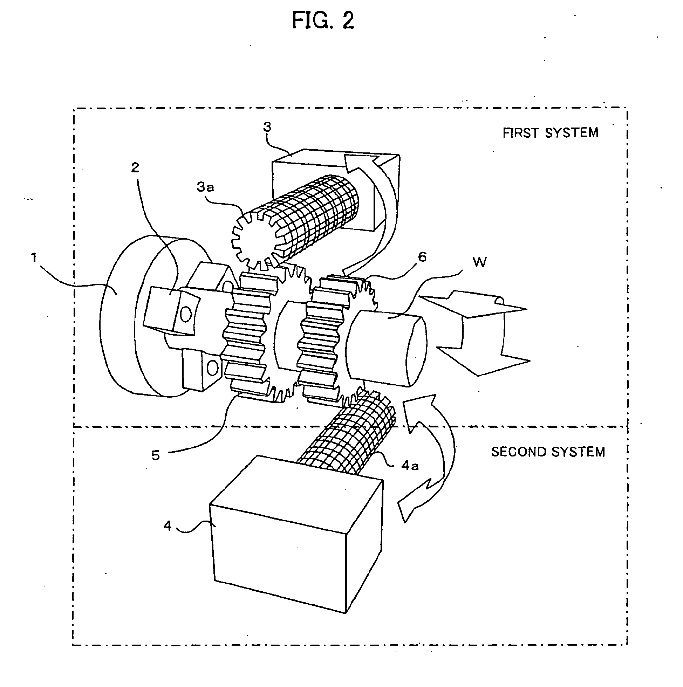

The numerical controller 10 is capable of controlling a plurality of systems, i.e. two systems in the arrangement shown in FIG. 2, and the servomotors 32-1 to 32-(i-1) are provided for driving axes in a first system and the servomotors 32-i to 32-n are provided for driving axes in a second system.

FIG. 2 shows an example of machining a gear using the numerical controller 10.

A workpiece W is attached to a master axis 1 by a chuck 2 to perform machining of the workpiece W by rotary tools 3 a and 4a. The axes for rotating the rotary tools 3a and 4a serve as slave axes 3 and 4, respectively, and the master axis 1 and the slave axes 3 and 4 are synchronously controlled to machine a first gear 5 and a second gear 6 from the workpiece W. In the example shown in FIG. 2, the master axis 1 and the slave axis 3 for the rotary tool 3a belong to the first system, and the slave axis 4 for the rotary tool 4a belongs to the second system.

In order to perform the machining of the gears 5 and 6, it is necessary to rotate slave axes 3 and 4, and thus the rotary tools 3 a and 4a, in synchronism with the master axis 1 at predetermined ratios with respect to the rotation of the master axis 1. Further, it is necessary to adjust phases of the master axis 1 and the slave axes 3 and 4 since the gears 5 and 6 have to be meshed with grooves of the rotary tools 3a and 4a.

The numerical controller 10 is applied to machining such as the above machining of different gears from one workpiece in which the slave axes have to be driven at predetermined synchronous ratios with respect to the master axis and also with phases thereof adjusted.

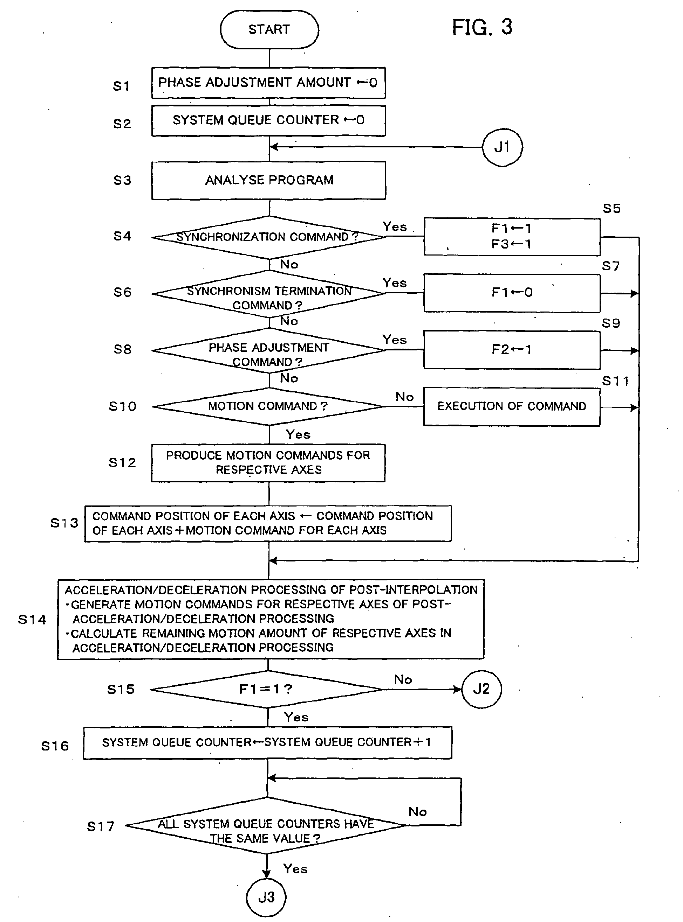

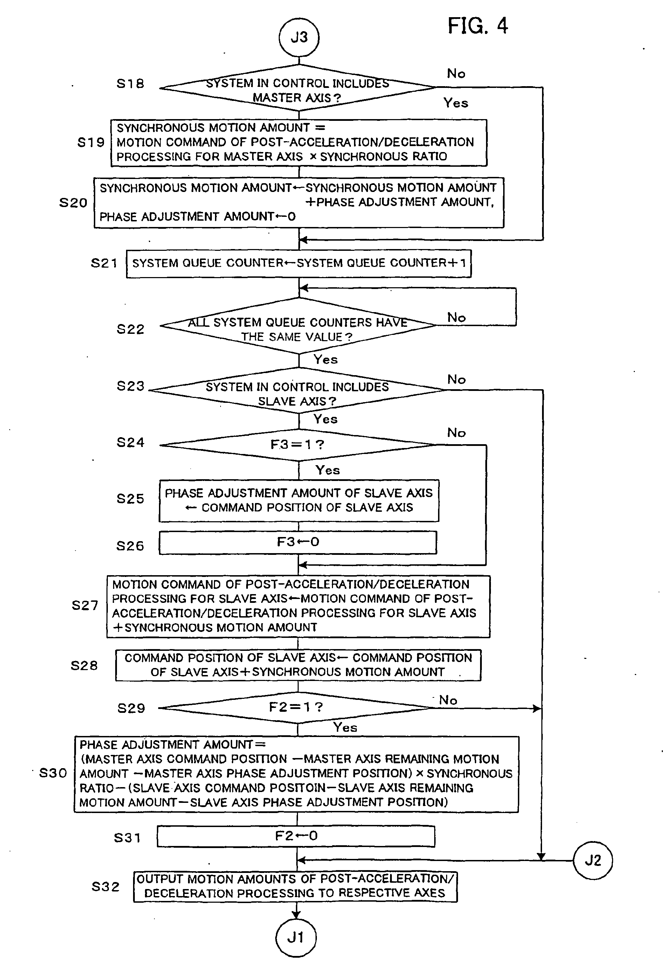

FIGS. 3 and 4 show processing to be performed by the CPU 11 of the numerical controller for the synchronous control. The CPU 11 performs the processing shown in FIGS. 3 and 4 for each control system in parallel in accordance with a machining program stored in the CMOS memory 14.

First, a master axis, slave axes, a phase adjustment position of the master axis for starting synchronization with the slave axis are set by parameters. When a machining start command is inputted from the display/manual input unit 20, the CPU starts the processing shown in FIGS. 3 and 4 for each control system in parallel. First, a phase adjustment amount is set to "0" (Step S1), and a queue counter for the system in control is set to "0" (Step S2). Then, one block of the machining program is read and analyzed to determine whether a command in read block is a synchronization command, a synchronism termination command, a phase adjustment command, or a motion command (Steps S4, S6, S8, S10). If the command is not any of these commands, the command is executed in a conventional manner (Step S11) and the procedure proceeds to Step S 14. If the command is a motion command, interpolation processing is performed to generate motion commands of post-interpolation processing for the respective control axes based on the motion command (Step S12), and the obtained motion commands for the respective control axes are added to values of registers for storing command positions of the respective axes to update the command positions of the respective axes (Step S13), and the procedure proceeds to Step S14.

In Step 14, acceleration/deceleration processing after interpolation is performed to generate motion commands of post-acceleration/deceleration processing for respective axes and also calculate remaining motion command amounts of the respective axis in the acceleration/deceleration processing. For instance, in a case of performing a linear acceleration/deceleration processing, motion commands remaining in registers for the acceleration/deceleration processing are used to calculate the remaining command amounts. Then, it is determined whether a flag F1 indicating midst of synchronizing processing is "1" or not, and if not, the procedure proceeds to Step S32 where the motion commands for respective axes obtained in Step S 14 are outputted to the axis control circuits 30-1 to 30-(i-1) of the first system or the axis control circuits 30-i to 30-n of the second control system, and the procedure returns to Step S3.

Thereafter, the processing of Steps S3, S4, S6, S8, S10, S12, S13 (or S11) and Steps S14, S 15 and S32 is repeatedly executed to drivingly control the respective systems independently.

On the other hand, when the command in the read block is a synchronization command (Step S4), the flag F1 is set to "1" (Step S5) and the acceleration/deceleration processing is performed at Step 14 and then it is determined whether the flag F1 is "1" or not in Step S15. In this case, it is determined that the flag F1 is "1", the procedure proceeds to Step S16 where the system queue counter for the system in control is incrementally increased by "1". Then, the procedure waits until the system queue counters of the all control systems have the same value (Step S17).

When the system queue counters of the all control systems have the same value, it is determined whether or not the system in control includes the master axis set by the parameter (Step S 18), and if the system in control includes the master axis, the motion command for the master axis obtained in Step S14 is multiplied by a synchronous ratio of each slave axis to obtain a synchronous motion amount which is converted into a motion amount of each slave axis (Step S19). A phase adjustment amount having an initial value of "0" stored in the register is added to the obtained synchronous motion amount to obtain a synchronous amount with the phase adjustment amount added is stored in the register, and the phase adjustment amount is reset to "0" (Step S20). Then, the procedure proceeds to Step 21. When it is determined that the system in control does not include a master axis in Step S 18, the procedure proceeds to Step 21 without executing the processing of Steps 19 and 20.

In Step 21, the system queue counter is incrementally increased by "1" and the procedure waits until the system queue counters of all systems have the same value (Step S22). When the system queue counters of all control systems have the same value, it is determined whether or not the system in control includes a slave axis (Step S23) and if not, the procedure proceeds to Step S32. If the system in control includes a slave axis, it is determined whether a flag F3 is "1" or not (Step S24) and if the flag F3 is "1", the command position of the slave axis obtained in Step S 13 is stored in the register as a phase adjusting position of the slave axis (Step S25) and the flag F3 is reset to "0" (Step S26). If it is determined that the flag F3 is not "1", the processing of Steps 25 and 26 is omitted. Namely, only when the synchronous command is issued and the flag F3 is set to "1", the command position of the slave axis is stored as the phase adjustment position of the slave axis:

Then, the synchronous motion amount for the slave axis obtained in Step S20 is added to the motion command of post-acceleration/deceleration processing obtained in Step S14, to obtain a motion command of post-acceleration/deceleration processing for the slave axis with the synchronous motion amount added (Step S27). Then, the synchronous motion amount is added to the command position of the slave axis obtained in Step S 13 and the resultant position of the slave axis is stored (Step S28).

Then, it is determined whether the flag F2 is "1" or not, and if not the procedure proceeds to Step S32 where the motion amounts of post-acceleration/deceleration processing for respective axes are issued to the axis control circuits 30-1 to 30-(i-1) of the first system or the axis control circuits 30-i to 30-n of the second system. The motion commands of post-acceleration/deceleration processing obtained in Step S14 are issued to the axes other than the slave axis and the motion command after the acceleration/deceleration processing obtained in Step S27 is issued to the slave axis.

Thereafter, the processing of Steps S3, S4, S6, S8, S10, S12, S13(or S11), S14-S24, S27-S29, S32 is repeatedly executed after the synchronous command is issued until a phase adjustment command is issued, the synchronous motion amount (which is obtained by multiplying the motion command of post-acceleration/deceleration processing for the master axis by the synchronous ratio) is added to the motion command of post-acceleration/deceleration processing for the slave axis and the obtained sum is issued as the motion command so that the slave axis is driven synchronously with the master axis at the set synchronous ratio.

When a phase adjustment command is read from the machining program (Step S8), the flag F2 is set to "1" at Step S9. After the flag F2 is set to "1", the processing of Steps S14-S29 is performed, and at Step S29 it is determined that the flag F2 is "1" and the processing proceeds to Step S30 in which the phase adjustment amount is calculated. First, the remaining motion amount in the acceleration/deceleration processing for the master axis obtained in Step S 14 is subtracted from the command position of the master axis obtained in Step S 13 to obtain an actual command position of the master axis (which has been actually commanded to the axis control circuit of the master axis). Then, the set phase adjustment position of the master axis is subtracted from the actual command position of the master axis to obtain a difference between the actual command position and the set phase adjustment position of the master axis, and the obtained difference is multiplied by the synchronous ratio to convert the difference into a motion amount of the slave axis. Further, the remaining motion amount in the acceleration/deceleration processing for the slave axis is subtracted from the command position of the slave axis obtained in Step S 13 to obtain the actual command position of the slave axis, and the phase adjustment position of the slave axis obtained in Step S25 is subtracted from the actual command position of the slave axis to obtain a difference between the actual command position and the phase adjustment position of the slave axis. Then, the obtained difference is subtracted from the above difference of the master axis (which is converted into the motion amount of the slave axis) to obtain a difference between displacement amounts of the master axis and the slave axis from the phase adjustment position as the phase adjustment amount. Then, the flag F2 is reset to "0" (Step S31) and the motion command obtained in Step S27 is issued to the slave axis and the motion commands of post-acceleration/deceleration processing are issued to the other axes (Step S32).

In the next processing period, the phase adjustment amount calculated in Step S30 is added to the motion command which is obtained by converting the motion command of post-acceleration/deceleration processing for the master axis into a motion amount of the slave axis, to obtain the synchronous amount at Steps S 19 and S20. Since this synchronous amount is added to the motion command of post-acceleration/deceleration processing for the slave axis at Step S27, a motion amount corresponding to the motion command for the master axis and the phase adjustment amount are added to the motion command for the slave axis. Since the phase adjustment amount is added to the motion command for the slave axis, the displacement amounts of the master axis and the slave axis from the phase adjustment positions is made "0" so that the phases of the master axis and the slave axes coincide with each other. Thus, the master axis and the slave axes are driven in synchronism at the set synchronous ratios with their phases adjusted.

Since the phase adjustment amount is set to "0" at Step S20, in the next processing period and subsequent processing periods, only the motion command for the mater axis, which is converted into the motion amount of the slave axis, is superposed on the motion command for the slave axis so that the slave axis is driven at the set synchronous ratio with respect to the master axis.

Then, when a synchronism termination command is read from the machining program, the procedure proceeds from Step S6 to Step S7 where the flag F1 is reset to "0", and thereafter the processing of Steps S3, S4, S6, S8, S10, S12, S13 (or S11) and Steps S 14, S 15, S32 is repeatedly executed to drivingly control the respective systems independently.

The foregoing embodiment is directed to the case in which the acceleration/deceleration processing is performed after the interpolation processing. In the case of performing the acceleration/deceleration processing before the interpolation processing, the motion commands for respective axes are motion commands after subjected to the acceleration/deceleration processing and therefore it is not necessary to take account of the remaining motion amount in the acceleration/deceleration processing since the motion commands for respective axes serve as actual command motion amounts and it is not necessary to consider an accumulated amount of the command position and therefore the command position serve as the actual command positions.

Further, in the foregoing embodiment, the phase adjusting position of the master axis is set by the parameter and the phase adjusting position of the slave axis is set to the command position of the slave axis when the synchronization is started (Step S25). Alternatively, the phase adjustment amount of the slave axis may be set by a parameter.

## Claims

1. A numerical controller for synchronously controlling a master axis (1) and at least one slave axis (3,4) in a plurality of control systems, said numerical controller comprising:
setting means for setting a synchronous ratio of the slave axis (3,4) with respect to the master axis (1);
synchronous motion amount producing means for producing a synchronous motion amount by multiplying a motion command for the master axis (1) by the set synchronous ratio; and
synchronous motion commanding means for determining a synchronous motion command for the slave axis (3,4) adding the synchronous motion amount to a motion command for the slave axis (3,4);
**characterized by**:
means for setting phase adjustment positions of the master axis (1) and the slave axis (3,4), and compensation means for compensating the synchronous motion command for the slave axis (3,4) such that phases of the master axis (1) and the slave axis (3,4) coincide with the set phase adjustment positions.

## Patentansprüche

1. Numerische Steuereinheit zum synchronen Steuern einer Hauptachse (1) und mindestens einer Unterachse (3, 4) in einer Anzahl Steuerungssysteme, umfassend
Eine Setzeinrichtung zum Setzen eines Synchronverhältnisses von Unterachse (3, 4) zur Hauptachse (1);
eine Synchronweggrößen-Erstelleinrichtung für das Erstellen einer Synchronweggröße durch Multiplizieren eines Wegbefehls der Hauptachse (1) mit dem gesetzten Synchronverhältnis; und
eine Synchronweg-Befehlseinrichtung zum Bestimmen eines Synchronwegbefehls der Unterachse (3, 4) durch Addieren von Synchronweggröße und Wegbefehl für die Unterachse (3, 4); **gekennzeichnet durch**
eine Einrichtung zum Setzen von Phasenanpasspunkten der Hauptachse (1) und der Unterachse (3, 4) und Ausgleicheinrichtungen zum Kompensieren des Synchronwegbefehls der Unterachse (3, 4) derart, dass die Phasen von Hauptachse (1) und Unterachse (3, 4) mit den gesetzten Phasenanpasspunkten zusammenfallen.

## Revendications

1. Unité de commande numérique pour commander d'une manière synchronisée un axe maître (1) et au moins un axe esclave (3,4) dans plusieurs systèmes de commande, ledit dispositif de commande numérique comprenant:
un moyen de réglage pour régler un rapport synchrone de l'axe esclave (3,4) par rapport à l'axe maître (1);
un moyen de production de quantité de mouvement synchrone pour produire une quantité de mouvement synchrone en multipliant une commande de mouvement de l'axe maître (1) par le rapport synchrone réglé; et
un moyen de commande de mouvement synchrone pour déterminer une commande de mouvement synchrone pour l'axe esclave (3,4) en ajoutant la quantité de mouvement synchrone à une commande de mouvement de l'axe esclave (3,4);
**caractérisée par**:
un moyen pour régler des positions d'ajustement de phase de l'axe maître (1) et de l'axe esclave (3,4), et un moyen de compensation pour compenser la commande de mouvement synchrone de l'axe esclave (3,4) de sorte que les phases de l'axe maître (1) et de l'axe esclave (3 et 4) coïncident avec les positions d'ajustement de phase réglées.
